# EUROPEAN PATENT APPLICATION

(11) **EP 3 936 964 A1**
(43) Date of publication of application: **12.01.2022**
(21) Application number: 20766606.6
(22) Date of filing: 19.02.2020
(51) Int. Cl.: G05D 1/02, G09B 29/00, G09B 29/10

(54) **MAP CREATION DEVICE, MAP CREATION METHOD, AND PROGRAM**

(30) Priority: 06.03.2019 JP 2019040543
(71) Applicant: Sony Group Corporation, Tokyo 108-0075 (JP)
(72) Inventor: TSURUMI, Shingo, Tokyo 108-0075 (JP)
(74) Representative: D Young & Co LLP
(86) International application number: PCT/JP2020/006649
(87) International publication number: WO 2020/179459

(57) **Abstract**

A map creation device that includes an in-map position control unit that sets, on the basis of information pertaining to a mobile body or an environment, position coordinates of the mobile body, the position coordinates being set on a map space in which a boundary demarcating a space and a boundary on a side opposite the boundary are connected, and a sensing reflection unit that creates an environment map corresponding to the environment surrounding the mobile body by causing environment information, sensed by the mobile body, to be reflected to the map space.

## Description

### [Technical Field]

The present disclosure relates to a map creation device, a map creation method, and a program.

### [Background Art]

In recent years, in a mobile body such as a robot device, a drone, or an automobile, the ability to create a movement plan by recognizing the environment surrounding the mobile body, and to move by following the created movement plan has become important.

In such a mobile body, for example, the movement plan is created by creating an environment map that reflects information pertaining to the surrounding environment, and detecting obstacle regions and regions through which movement is possible. Accordingly, in order to more efficiently create a highly accurate movement plan, techniques for more efficiently creating the environment map have been considered.

For example, the following PTL 1 discloses a technique for reducing the cost relating to the holding and updating of an environment map represented by an occupancy grid map in order to efficiently use limited computational resources and memory resources in a robot device or the like.

### [Citation List]

### [Patent Literature]

[PTL 1]
JP 2003-266349A

### [Summary]

### [Technical Problem]

By virtue of the technique disclosed in the abovementioned PTL 1, it is possible to create an environment map for a limited range around a mobile body. However, in conjunction with, for example, higher movement speeds of mobile bodies in recent years, further increasing the range of a created environment map is required.

Accordingly, the present disclosure proposes a new and improved map creation device, map creation method and program that enable the creation of an environment map that is suitable for a movement plan and is for a wider range, while suppressing increases in memory consumption and processing load.

### [Solution to Problem]

By virtue of the present disclosure, there is provided a map creation device including an in-map position control unit that sets, on the basis of information pertaining to a mobile body or an environment, position coordinates of the mobile body, the position coordinates being set on a map space in which a boundary demarcating a space and a boundary on a side opposite the boundary are connected, and a sensing reflection unit that creates an environment map corresponding to the environment surrounding the mobile body by causing environment information, sensed by the mobile body, to be reflected to the map space.

In addition, by virtue of the present disclosure, there is provided a map creation method that includes, by an arithmetic device, setting, on the basis of information pertaining to a mobile body or an environment, position coordinates of the mobile body, the position coordinates being set on a map space in which one boundary demarcating a space and another boundary on a side opposite the one boundary are connected, and creating an environment map corresponding to the environment surrounding the mobile body by causing environment information, sensed by the mobile body, to be reflected to the map space.

Further, by virtue of the present disclosure, there is provided a program for causing a computer to function as an in-map position control unit that sets, on the basis of information pertaining to a mobile body or an environment, position coordinates of the mobile body, the position coordinates being set on a map space in which one boundary demarcating a space and another boundary on a side opposite the one boundary are connected, and a sensing reflection unit that creates an environment map corresponding to the environment surrounding the mobile body by causing environment information, sensed by the mobile body, to be reflected to the map space.

### [Brief Description of Drawings]

[FIG. 1]

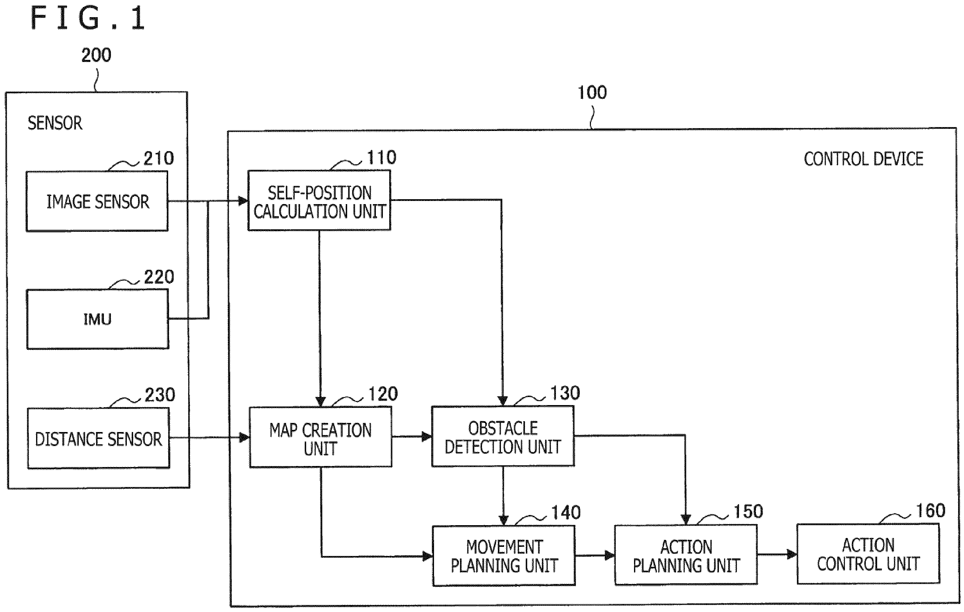

   FIG. 1 is a block view for describing an internal configuration of a control device that includes a map creation device according to one embodiment of the present disclosure.
[FIG. 2]

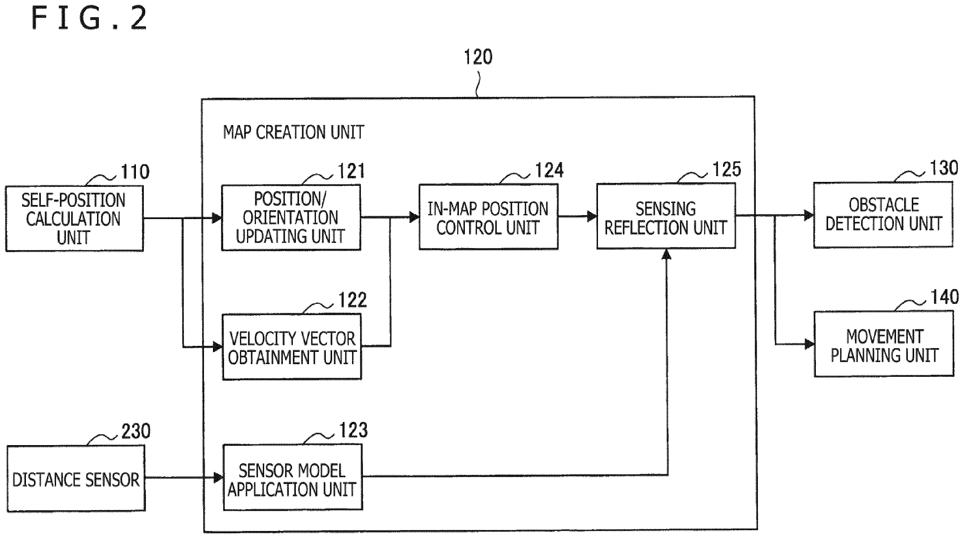

   FIG. 2 is block view for describing an internal configuration of a map creation unit according to the embodiment.
[FIG. 3A]

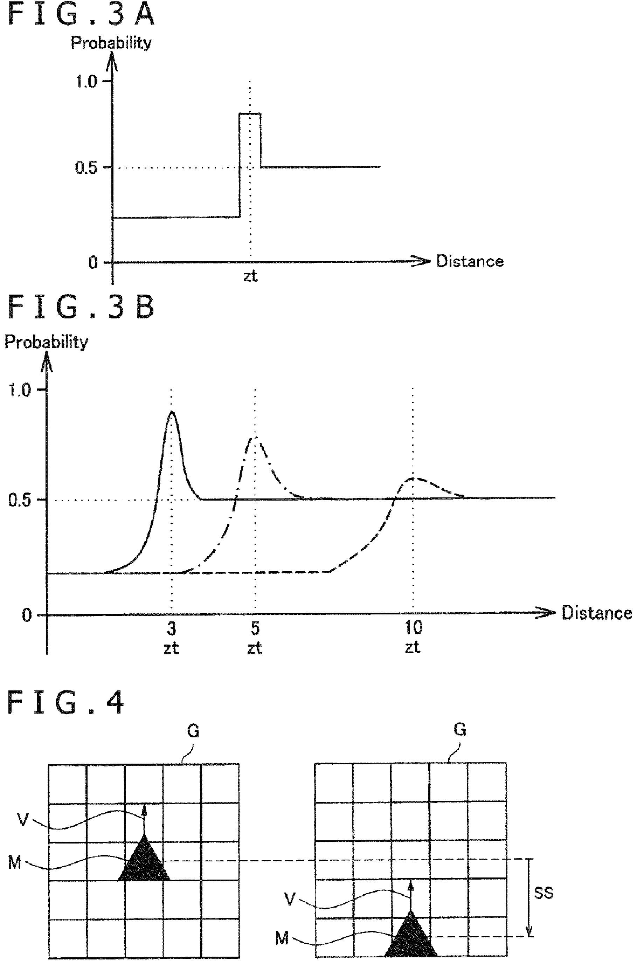

   FIG. 3A is a graph view that illustrates a distance sensing result in an ideal sensor model.
[FIG. 3B]
   FIG. 3B is a graph view that illustrates a distance sensing result in a stereo camera.
[FIG. 4]
   FIG. 4 is an explanatory view for describing position control for a mobile body in a map space according to the embodiment.
[FIG. 5]

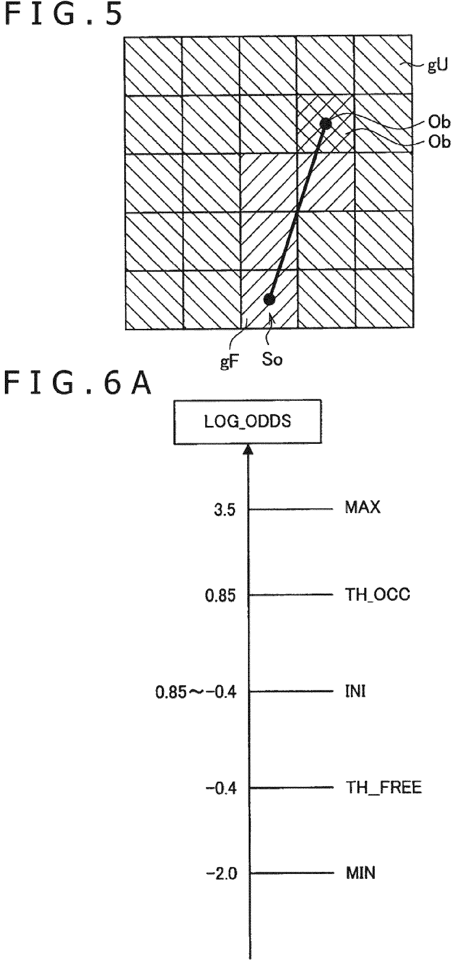

   FIG. 5 is an explanatory view for describing a method of reflecting distance information to a map space.
[FIG. 6A]
   FIG. 6A is a graph view that illustrates an example of occupancy probability thresholds that are for determining occupied regions or free regions for grid cells.
[FIG. 6B]

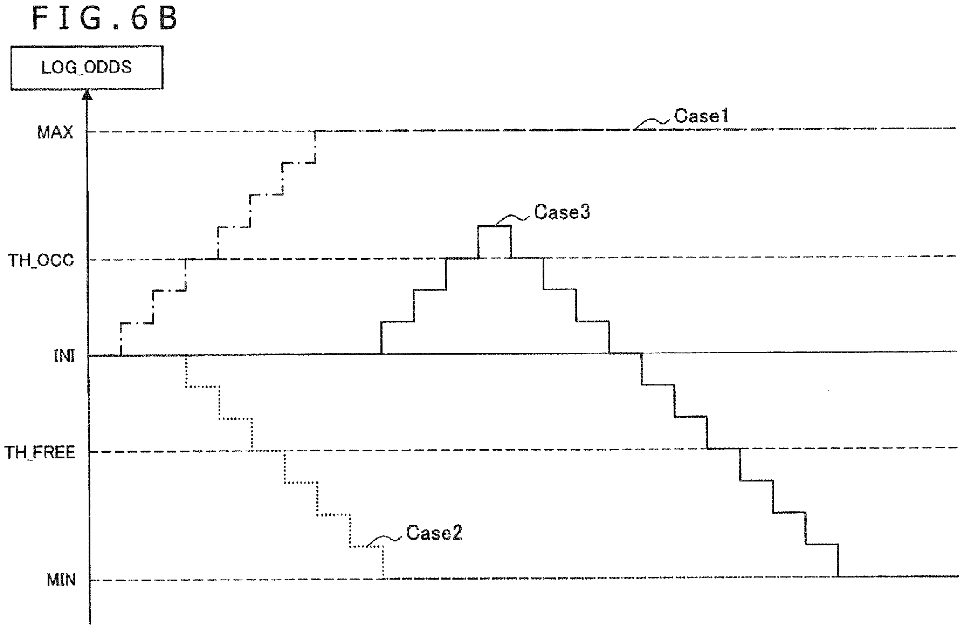

   FIG. 6B is a graph view that illustrates an example of updating grid cell occupancy probabilities.
[FIG. 7]

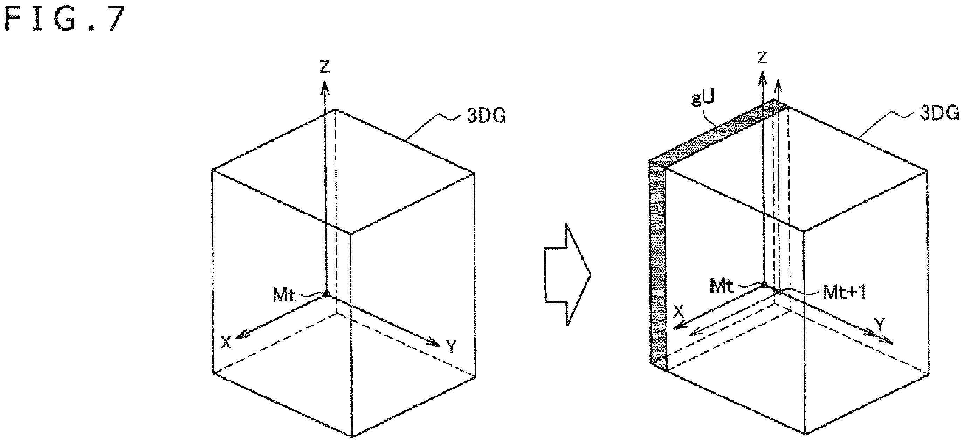

   FIG. 7 is an explanatory view for describing a ring buffer in a three-dimensional map space.
[FIG. 8]

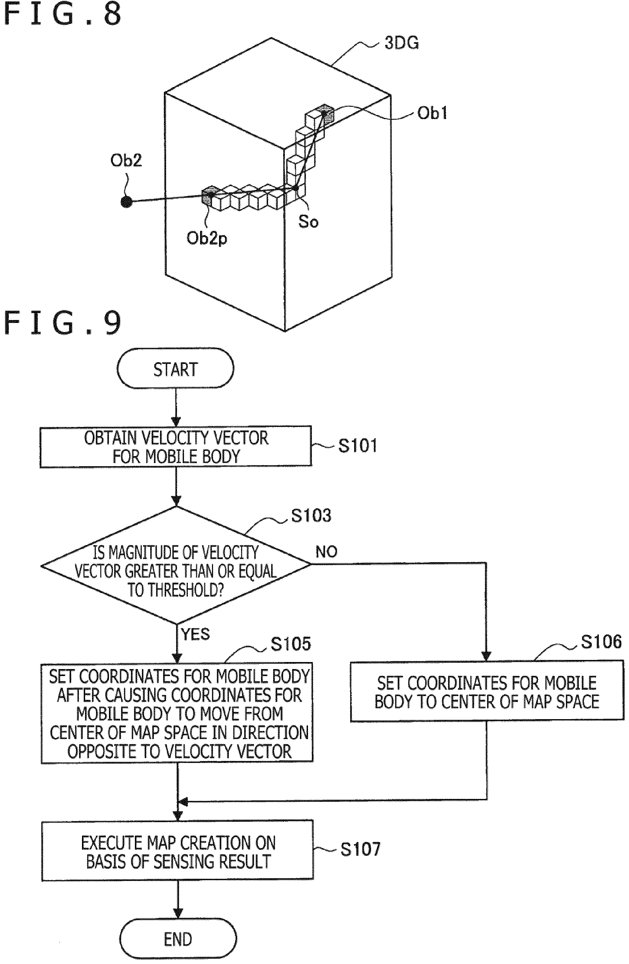

   FIG. 8 is an explanatory view for describing reflection of distance information in a three-dimensional map space.
[FIG. 9]
   FIG. 9 is a flow chart for describing an example of a flow of operations for the map creation unit according to the embodiment.
[FIG. 10A]

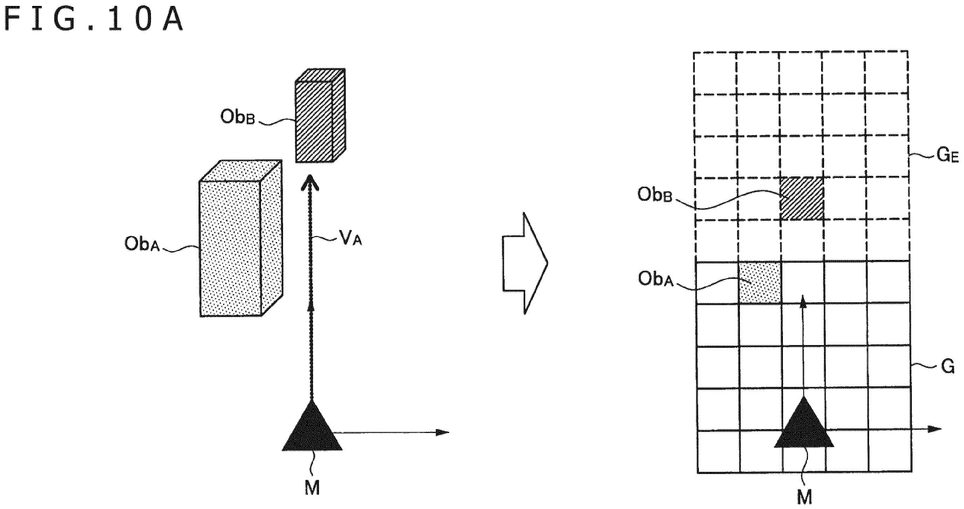

   FIG. 10A is an explanatory view that illustrates each of an environment map created by a modification of the map creation unit, and an example of correspondence with the environment around a mobile body.
[FIG. 10B]

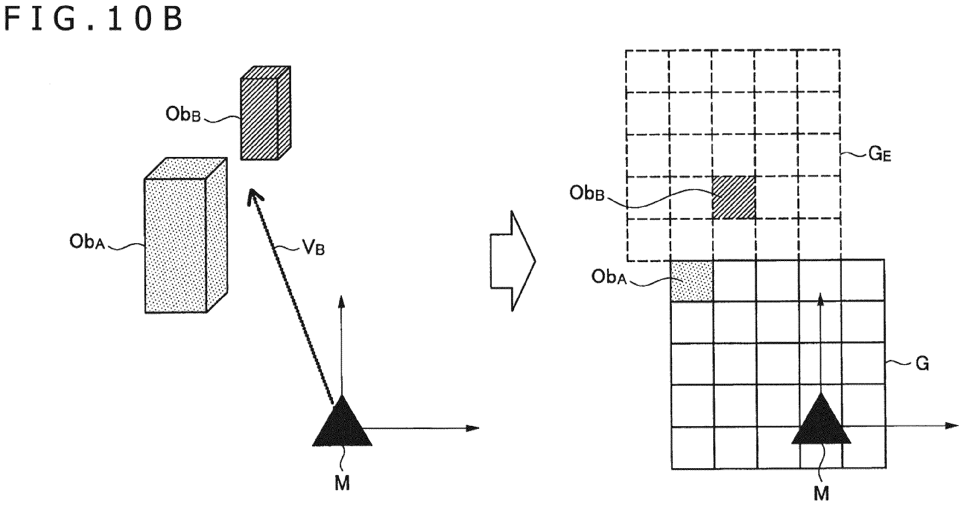

   FIG. 10B is an explanatory view that illustrates each of an environment map created by a modification of the map creation unit, and an example of correspondence with the environment around a mobile body.
[FIG. 10C]

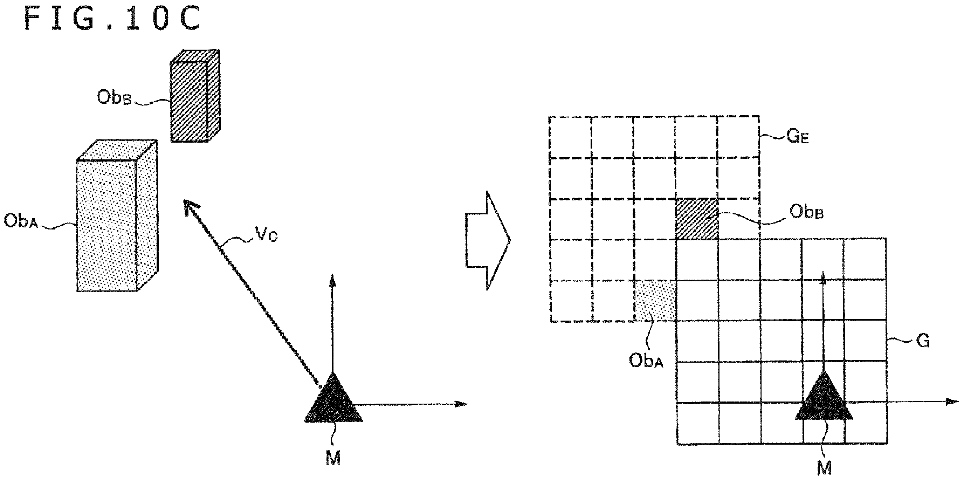

   FIG. 10C is an explanatory view that illustrates each of an environment map created by a modification of the map creation unit, and an example of correspondence with the environment around a mobile body.
[FIG. 10D]

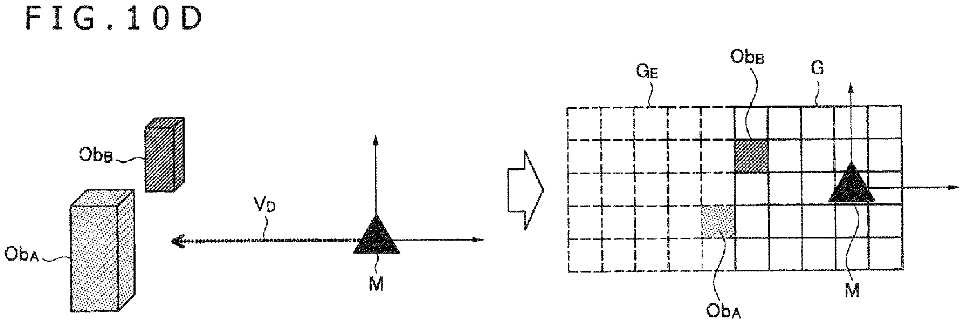

   FIG. 10D is an explanatory view that illustrates each of an environment map created by a modification of the map creation unit, and an example of correspondence with the environment around a mobile body.
[FIG. 11]

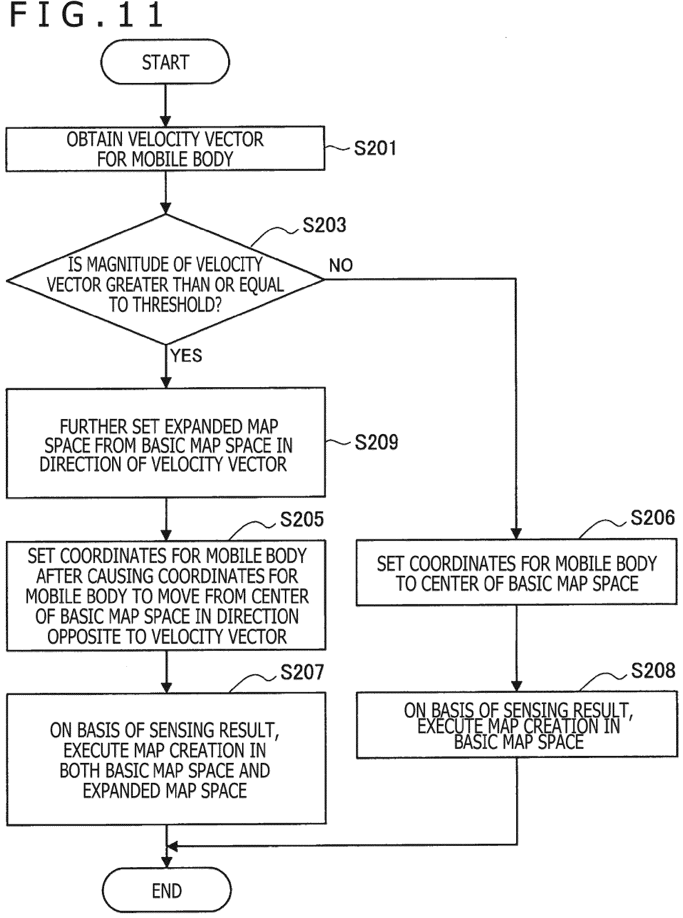

   FIG. 11 is a flow chart for describing an example of a flow of operations for the map creation unit according to the modification.
[FIG. 12]

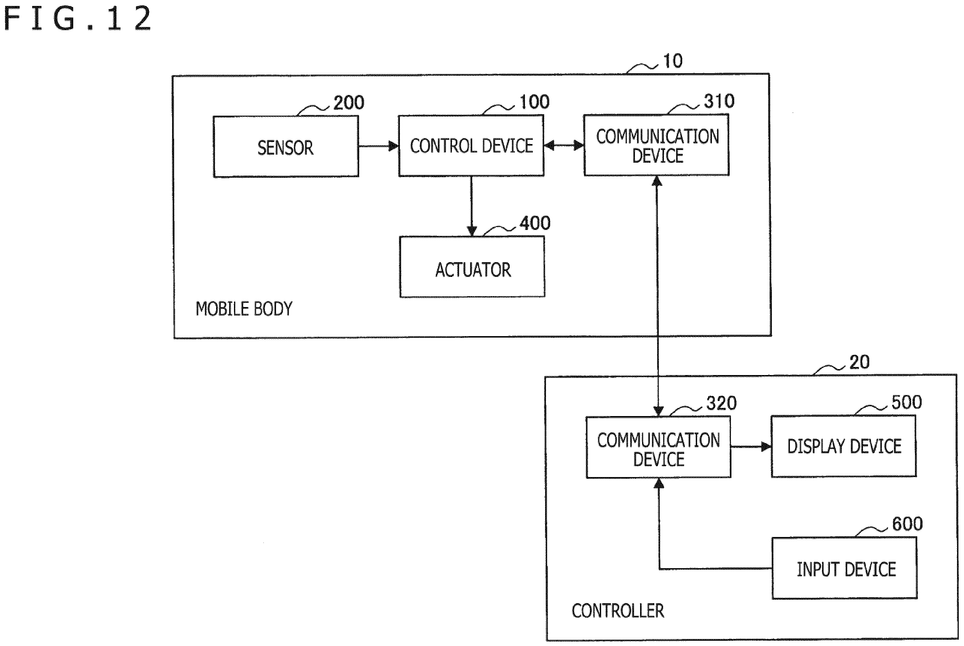

   FIG. 12 is a block view for describing a configuration of a controller in which an environment map is displayed.
[FIG. 13A]

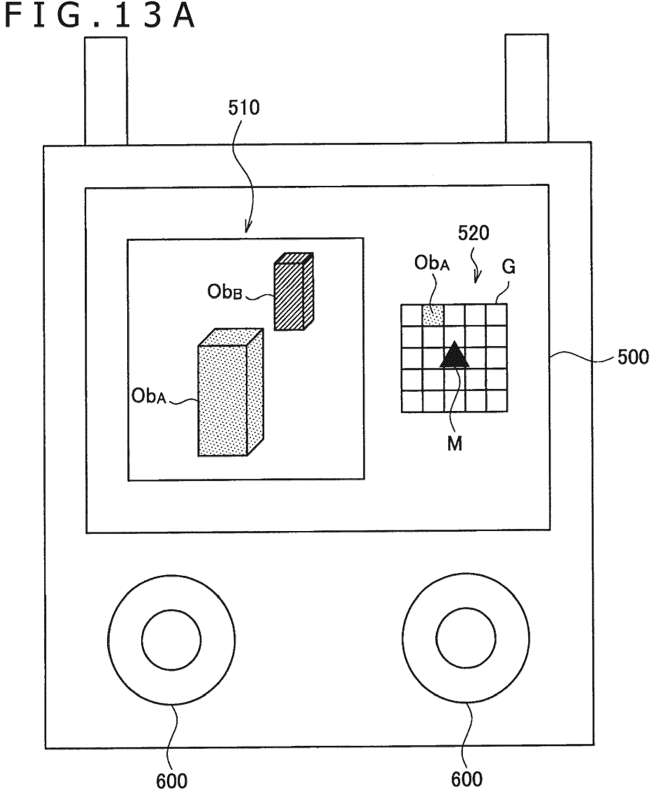

   FIG. 13A is an explanatory view that illustrates an example of a display of an environment map in a case where a mobile body moves at low speed.
[FIG. 13B]

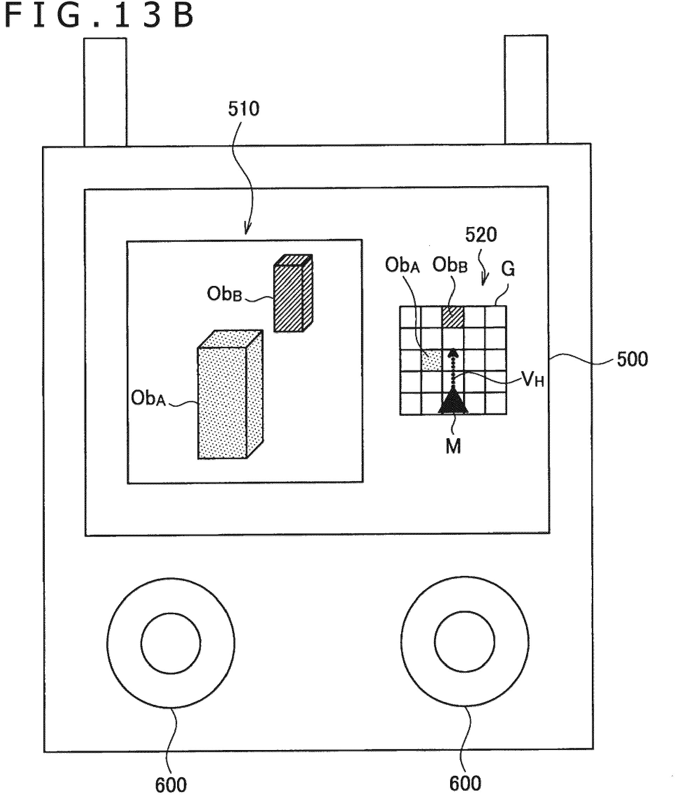

   FIG. 13B is an explanatory view that illustrates an example of a display of an environment map in a case where a mobile body moves at high speed.
[FIG. 14]

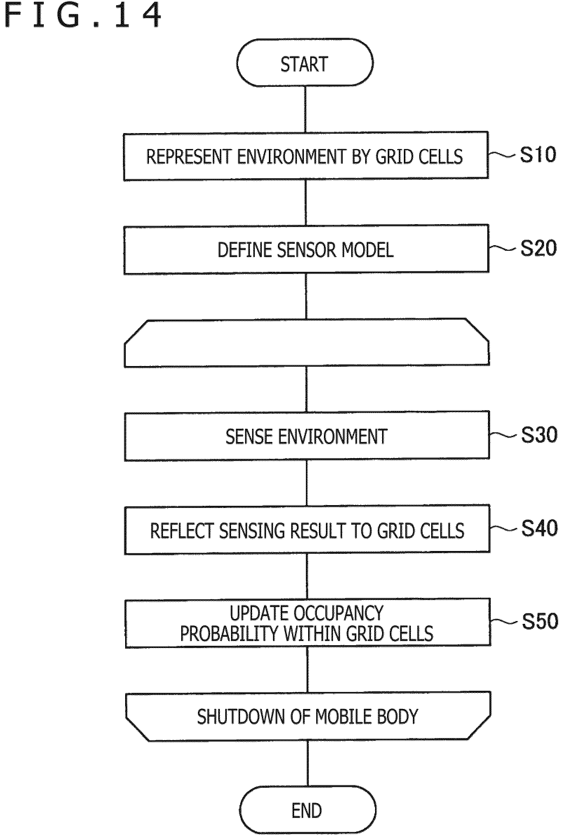

   FIG. 14 is a flow chart for describing a flow for creating an occupancy grid map.
[FIG. 15]

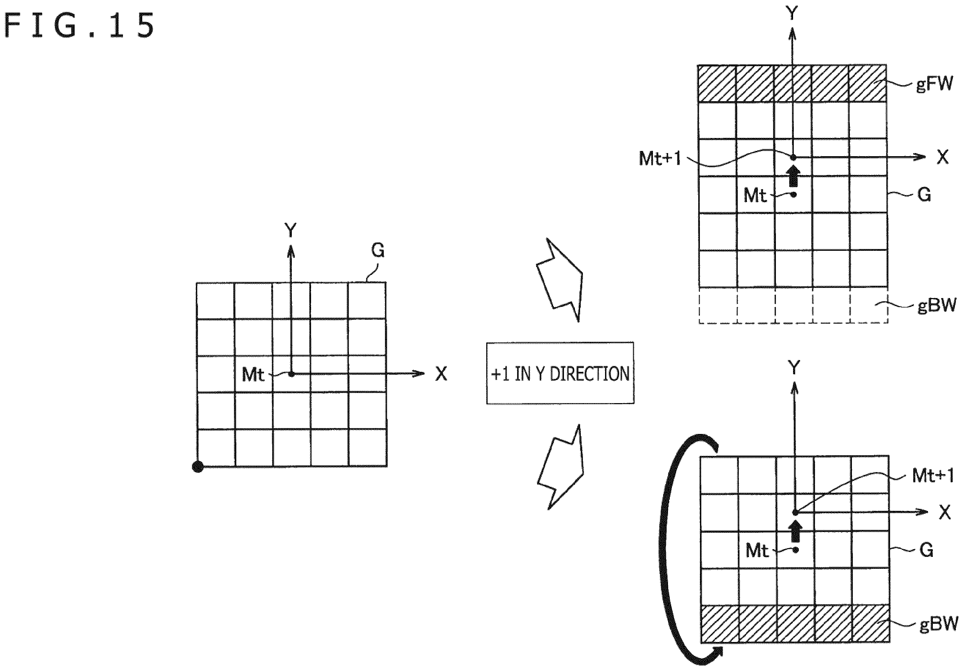

   FIG. 15 is an explanatory view for describing a method of updating information in an occupancy grid map.

### [Description of Embodiments]

With reference to the attached drawings, description is given in detail below regarding preferred embodiments of the present disclosure. Note that in the present specification and drawings, the same reference sign is applied to components having substantially the same functional configuration, and thereby duplicate descriptions are omitted.

Note that the description shall be given out in the following order.
1. Background technique pertaining to the present disclosure
2. Configuration of control device
3. Configuration of map creation unit
4. Operation of map creation unit
5. Modification
   5.1. Configuration of modification
   5.2. Operation of modification
6. Display examples

### <1. Background technique pertaining to the present disclosure>

A map creation device according to one embodiment of the present disclosure uses an occupancy grid map to create an environment map that reflects information regarding the environment around a mobile body. Firstly, with reference to FIG. 14, description is given regarding an occupancy grid map.

An occupancy grid map is an example of one technique for the mobile body to detect regions through which movement is possible, and obstacle regions. Specifically, an occupancy grid map is a technique of detecting free regions through which movement is possible and occupied regions in which an obstacle is present, by dividing a space into square shaped grid cells and setting an object occupancy probability for each grid cell on the basis of a sensing result from the mobile body.

An occupancy grid map can be created by a flow illustrated in FIG. 14, for example. FIG. 14 is a flow chart for describing a flow for creating an occupancy grid map. According to the flow illustrated in FIG. 14, firstly, a map space that represents the environment surrounding a mobile body by square shaped grid cells and is centered on the mobile body is set (S10).

Next, a sensor model for a distance sensor that observes the environment around the mobile body is defined (S20). This is because distance sensors that observe the environment around a mobile body have different observation result characteristics in accordance with the method of sensing distance. For example, a distance sensor that uses a stereo camera has a higher error included in an observation result the greater the distance from an object. Accordingly, by defining a sensor model suitable for a distance sensor that is used, it is possible to improve the accuracy and reliability of the environment map to be created.

Subsequently, the distance sensor is used to observe (sense) the environment around the mobile body (S30), and reflect a sensing result to the map space (S40). Specifically, for each grid cell, an occupancy probability representing the probability that an object is present in the grid cell is set, and the occupancy probability for a grid cell that includes an object is increased on the basis of information regarding the distance between the observed mobile body and the object. Meanwhile, a grid cell between the mobile body and the object does not include an object, and the occupancy probability therefor is reduced.

Furthermore, after reflecting the sensing result, the occupancy probability of each grid cell is updated (S50). By increasing or reducing the occupancy probability in accordance with S40 for each sensing result, the occupancy probability of a grid cell that includes an object gradually increases, and the occupancy probability of a grid cell that does not include an object gradually decreases. By this, it is possible to determine a grid cell, for which the occupancy probability has increased higher than a threshold for determining an obstacle region, to be an obstacle region. In addition, it is possible to determine a grid cell, for which the occupancy probability has become lower than a threshold for determining a region through which movement is possible, to be a region through which movement is possible.

Until the mobile body shuts down, by repeating the operations of step S30 through step S50 described above, the mobile body can create an environment map that reflects information regarding the surrounding environment, and create a movement plan on the basis of the created environment map.

Here, two patterns can be considered for the reference coordinate system of the occupancy grid map: world coordinate system fixed and body coordinate system fixed.

World coordinate system fixed is where the coordinate system of the occupancy grid map is fixed to the environment. In a case where world coordinate system fixed is used, it is possible to create the occupancy grid map by reflecting to the map space each sensing result observed from the mobile body in consideration of the position/orientation of the mobile body. For example, it is possible to create an occupancy grid map by mapping the coordinates of the mobile body to a map space in the world coordinate system and additionally adding an observation result from the mobile body to the map space.

However, a case of representing a large-scale environment by an occupancy grid map that is world coordinate system fixed leads to creating an occupancy grid map that includes information regarding the overall environment, and thus, a large capacity memory is needed to hold the occupancy grid map. In a three-dimensional occupancy map grid, a method (generally-called OctoMap) for suppressing memory consumption by holding information regarding each grid cell in a tree structure is considered, but this method traces the tree structure when reading out information regarding each grid cell and thus, the processing load increases.

In contrast, body coordinate system fixed is a coordinate system that fixes the coordinate system of the occupancy grid map to the position/orientation of the mobile body. In a case of using body coordinate system fixed, it is possible to create the occupancy grid map by, depending on a change in the position/orientation of the mobile body, subjecting past information regarding the occupancy grid map to a coordinate conversion, reflecting the past information to the map space, and additionally reflecting a sensing result observed from the mobile body to the map space. For example, it is possible to create an occupancy grid map by performing a reverse conversion, depending on change in the position of the mobile body, on a body coordinate system occupancy grid map for one time earlier, and adding a current observation result to the occupancy grid map after the reverse conversion.

However, with a body coordinate system fixed occupancy grid map, the processing load becomes high because information regarding the occupancy grid map is subject to a coordinate conversion each time the position/orientation of the mobile body changes. Accordingly, with body coordinate system fixed, a method that reduces the processing load by configuring the map space by a ring buffer has been considered. With reference to FIG. 15, description is given regarding an occupancy grid map that is configured by a ring buffer. FIG. 15 is an explanatory view for describing a method of updating information in an occupancy grid map.

A ring buffer is a buffer in which, by both ends of a linear buffer being connected, in a case where information is written beyond the end, the information beyond the end is written after returning to the start. In other words, a map space G is a space in which, one boundary is connected to the other boundary on the opposite side.

As illustrated in FIG. 15, position coordinates Mt for a mobile body at a time t are set on a map space G represented by an occupancy grid map, and consideration is given regarding a case where the mobile body has moved to position coordinates Mt+1 at a time t+1.

In a case where the map space is not a ring buffer (upper side when facing FIG. 15), it is possible to update the environment map by, in conjunction with movement of the mobile body, adding a row of grid cells gFW set as an unknown region that is yet to be observed ahead of the most forward row grid cells in a direction of movement of the mobile body and deleting the most rearward row of grid cells gBW in a direction opposite to the direction of movement of the mobile body. By this, it is possible to create an environment map that supports the environment surrounding the mobile body, even when the mobile body has moved.

In contrast, in a case where the map space G is a ring buffer (lower side when facing FIG. 15), it is possible to update the environment map by, in conjunction with movement of the mobile body, resetting grid cells gBW for the most rearward row in the direction opposite to the direction of movement of the mobile body to an unknown region that is yet to be observed. In other words, in a ring buffer, the grid cells in front of the grid cells in the most forward row in the direction of movement of the mobile body become the grid cells gBW in the most rearward row in the direction opposite to the direction of movement of the mobile body. Accordingly, it is possible to reduce the amount of memory consumed by the map space G by reusing the grid cells gBW of the most rearward row, for which a frequency of use can be considered to be low, as the grid cells for an unknown region added in conjunction with movement of the mobile body.

However, in a body coordinate system fixed occupancy grid map, the range of an environment map that is created is only a range that surrounds the mobile body. In such a case, it has been difficult for the mobile body to create such a movement plan that movement is made along a long distance. In addition, in a case where the mobile body moves at a high speed, there is a possibility that the mobile body will suffer delays in discovery of an obstacle.

As described above, although various techniques have been considered, in an occupancy grid map to be used in creation of a movement plan for a mobile body, it has been difficult to create an environment map appropriate for a low amount of memory consumption and a low processing load.

In particular, in conjunction with the change to higher speeds for the movement speed of mobile bodies and increasing complexity for movement plans, in a case of creating a movement plan for a wider range, creating an environment map for a wider range while suppressing increases in memory consumption and processing load is requested.

For example, in a case where a mobile body is a flight vehicle such as a drone, because the occupancy grid map and the movement plan for the mobile body will be three-dimensional, the complexity of the movement plan and the amount of information for the occupancy grid map dramatically increase, and the memory consumption and processing load also dramatically increase. Accordingly, in a case such as this, it has become important to suppress memory consumption and processing load in the creation of the environment map and the movement plan.

The technique according to the present disclosure has been conceived of by the inventors on the basis of the circumstances described above. Description in detail is given below regarding the technique according to the present disclosure that enables creation of an environment map that is suitable for a movement plan and is for a wider range, while suppressing increases in memory consumption and processing load.

### <2. Configuration of control device>

Firstly, with reference to FIG. 1, description is given regarding a control device that includes a map creation device according to one embodiment of the present disclosure. FIG. 1 is a block view for describing an internal configuration of a control device that includes a map creation device according to the present embodiment.

As illustrated in FIG. 1, a control device 100 creates a movement plan for a mobile body on the basis of an environment map created on the basis of information obtained from a sensor 200, and controls movement by the mobile body on the basis of the created movement plan. The control device 100 is provided with, for example, a self-position calculation unit 110, a map creation unit 120, an obstacle detection unit 130, a movement planning unit 140, an action planning unit 150, and an action control unit 160.

The self-position calculation unit 110 calculates the position/orientation of the mobile body on the basis of information obtained from the sensor 200 which is mounted on the mobile body. Specifically, the self-position calculation unit 110 firstly obtains image information captured by an image sensor 210 that is an RGB camera, a grayscale camera, or the like that is mounted to the mobile body, and obtains information pertaining to the position/orientation of the mobile body from an IMU (Inertial Measurement Unit) 220 that includes an acceleration sensor, a gyro sensor, a magnetic sensor, or the like. Next, the self-position calculation unit 110 calculates the position, orientation, speed, angular velocity, and the like (hereinafter, information pertaining to these parameters may be collectively referred to as self information) of the mobile body on the basis of the image information captured by the mobile body and the information pertaining to the position/orientation of the mobile body. Because it is possible to use publicly known methods for methods of calculating the position, orientation, speed, angular velocity, and the like of the mobile body by the self-position calculation unit 110, detailed description here is omitted. Note that the self-position calculation unit 110 may further obtain information pertaining to a sensing result from another sensor mounted to the mobile body as necessary to calculate the position, orientation, speed, angular velocity, or the like of the mobile body.

The map creation unit 120 corresponds to a map creation device according to the present embodiment, and creates an environment map corresponding to the environment surrounding the mobile body on the basis of distance information regarding objects that is obtained from the sensor 200 (specifically, a distance sensor 230) mounted to the mobile body and the self information of the mobile body that is calculated by the self-position calculation unit 110. The environment map created by the map creation unit 120 is a body coordinate system fixed ring buffer occupancy grid map, and each grid cell of the environment map is set to any of an occupied region for which the occupancy probability is high, a free region for which the occupancy probability is low, and an unknown region that is yet to be observed. With reference to FIG. 2, description is given below regarding a detailed configuration and operation of the map creation unit 120.

The obstacle detection unit 130 detects an obstacle present in the environment map created by the map creation unit 120. Specifically, the obstacle detection unit 130 detects the presence or absence of an obstacle with respect to the mobile body by evaluating each occupied region and each free region in the environment map according to a body characteristic or an action characteristic of the mobile body. Note that the body characteristic or the action characteristic of the mobile body can be determined on the basis of self information of the mobile body that is calculated by the self-position calculation unit 110, for example.

For example, in a case where the mobile body is an automobile that moves by wheels, the obstacle detection unit 130 can determine that an object having a height that the wheels cannot drive over is an obstacle. In addition, in a case where the mobile body is a robot device that moves by leg sections, the obstacle detection unit 130 can determine that an object having a height that can be stepped over by the leg sections is not an obstacle. Further, in a case where the mobile body is a flight vehicle such as a drone, the obstacle detection unit 130 can determine that an object present at a position lower than an altitude that the mobile body can fly at is not an object.

The movement planning unit 140 plans a route to a destination for the mobile body, on the basis of the self information of the mobile body and the environment map created by the map creation unit 120. Specifically, the movement planning unit 140 can plan an optimal route to the destination by applying a graph search algorithm such as Dijkstra's algorithm or the A* algorithm to the environment map which is an occupancy grid map and is created by the map creation unit 120. At this time, the movement planning unit 140 may apply the graph search algorithm after determining obstacle regions and regions through which movement is possible in the environment map on the basis of the presence or absence of an obstacle which is detected by the obstacle detection unit 130.

The action planning unit 150 plans actions for the mobile body on the basis of the self information of the mobile body, the movement plan by the movement planning unit 140, and information pertaining to obstacles detected by the obstacle detection unit 130. Specifically, on the basis of, for example, an instruction from a user, the self information of the mobile body, the movement plan, or the information pertaining to obstacles, the action planning unit 150 creates an action plan pertaining to actions by the mobile body other than movement. For example, the action planning unit 150 may create an action plan that includes capturing the environment by the image sensor 210 which is mounted to the mobile body. In addition, the action planning unit 150 may create an action plan that includes loading or unloading of cargo to or from the mobile body or a person getting into or out of the mobile body.

The action control unit 160 controls actual actions by the mobile body, on the basis of the self information of the mobile body, the movement plan, and the action plan created by the action planning unit 150. Specifically, the action control unit 160 compares the state of the mobile body determined from the self information of the mobile body with the state of the mobile body planned in accordance with the movement plan or the action plan, and outputs to a driving unit of the mobile body (for example, a motor or the like) a drive command for making the state of the mobile body approach the planned state. Note that the action control unit 160 may generate, in a hierarchical fashion, a control command that is outputted to the driving unit of the mobile body.

### <3. Configuration of map creation unit>

Next, with reference to FIG. 2, description is given regarding a specific configuration of the map creation unit 120 included in the control device 100. FIG. 2 is a block view for describing an internal configuration of the map creation unit 120.

As illustrated in FIG. 2, the map creation unit 120 is provided with a position/orientation updating unit 121, a velocity vector obtainment unit 122, a sensor model application unit 123, an in-map position control unit 124, and a sensing reflection unit 125.

The position/orientation updating unit 121 calculates the coordinates of the mobile body in the environment map on the basis of information pertaining to the position/orientation of the mobile body. Specifically, the position/orientation updating unit 121 calculates the current coordinates of the mobile body in the environment map on the basis of information pertaining to past coordinates of the mobile body in the environment map, a past position/orientation of the mobile body, and information pertaining to the current position/orientation of the mobile body. In other words, the position/orientation updating unit 121 calculates an amount of change in the position/orientation between the past and the present for the mobile body, and calculates the current coordinates of the mobile body in the environment map on the basis of the calculated amount of change.

The velocity vector obtainment unit 122 obtains information pertaining to a velocity vector of the mobile body from the self-position calculation unit 110. Specifically, the velocity vector obtainment unit 122 obtains from the self-position calculation unit 110 a velocity vector of the mobile body that includes the movement speed and the direction of movement.

The sensor model application unit 123 applies a sensor model selected on the basis of the method of sensing by the distance sensor 230 to distance information for an object.

Here, with reference to FIG. 3A and FIG. 3B, description is given regarding the sensor model in the distance sensor 230. FIG. 3A is a graph view that illustrates a sensing result for distance in an ideal sensor model, and FIG. 3B is a graph view that illustrates a sensing result for distance in a stereo camera.

As illustrated in FIG. 3A, in the ideal sensor model, in a case where an object is present at a distance (Distance) zt, the probability (Probability) that an object is present can be obtained as a sensing result having a pulse shaped peak at the distance zt. In addition, in the ideal sensor model, error in the sensing result is constant and does not depend on the distance to an object.

In contrast, as illustrated in FIG. 3B, with a sensor model for a stereo camera or the like, in a case where an object is present at a distance (Distance) zt, the probability (Probability) that an object is present can be obtained as a sensing result having a pulse with a distribution at the distance zt. In addition, in a sensor model for a stereo camera or the like, error in the sensing result increases the greater the distance to an object.

Accordingly, the sensor model application unit 123 can cause the reliability with respect to distance information to improve by correcting a characteristic difference in sensing results that occurs due to the method of sensing by the distance sensor 230. In other words, the sensor model application unit 123 can cause reliability with respect to distance information to improve by applying the sensor model of the distance sensor 230 to distance information for objects. By this, the map creation unit 120 can create an environment map with higher reliability with respect to the setting of occupied regions and free regions.

The in-map position control unit 124 controls the position coordinates of the mobile body in the map space on the basis of the coordinates of the mobile body in the environment map and the velocity vector of the mobile body.

Here, with reference to FIG. 4, more specific description is given regarding movement of the coordinates of the mobile body in the map space. FIG. 4 is an explanatory view for describing position control for the mobile body in the map space.

As illustrated in FIG. 4, the in-map position control unit 124 first, on the basis of the coordinates of the mobile body in the environment map, updates the environment map such that the mobile body M is disposed at the center of the map space G. Subsequently, the in-map position control unit 124, on the basis of a velocity vector V for the mobile body M, causes the coordinates of the mobile body M to move from the center of the map space G. Specifically, the in-map position control unit 124 causes the coordinates of the mobile body M to move in a direction opposite the direction of the velocity vector V of the mobile body M (in other words, in the direction of movement of the mobile body M), from the center of the map space G. By this, the in-map position control unit 124 can widen, in the direction of movement of the mobile body, the range at which the environment map is created, and thus, smoother creation of the movement plan by the movement planning unit 140 becomes possible. An amount of movement SS of the mobile body from the center of the map space G may be decided on the basis of the magnitude of the velocity vector V of the mobile body, for example.

The in-map position control unit 124 may control the amount of movement SS of the mobile body M from the center of the map space G according to the magnitude of the velocity vector V of the mobile body M. In other words, the in-map position control unit 124 may control the coordinates of the mobile body M such that the amount of movement SS from the center of the map space G increases the greater the magnitude of the velocity vector V of the mobile body M. In addition, in a case where the magnitude of the velocity vector V of the mobile body M is greater than or equal to a threshold, it may be that the in-map position control unit 124 causes the coordinates of the mobile body M to move, from the center of the map space G in a direction opposite to the direction of the velocity vector V of the mobile body M, only by a predetermined amount or an amount according to the magnitude of the velocity vector V of the mobile body M.

In addition, the in-map position control unit 124 may cause the coordinates of the mobile body to move from the center of the map space on the basis of the movement plan of the mobile body, in place of the velocity vector of the mobile body. Specifically, the in-map position control unit 124 may cause the coordinates of the mobile body to move from the center of the map space in a direction opposite to the direction of the destination (or arrival position) of the mobile body in the movement plan for the mobile body. The amount of movement for the coordinates of the mobile body at this time may be a predetermined amount and may be an amount based on the magnitude of the movement speed of the mobile body, for example. By this, the in-map position control unit 124 can widen the range at which the environment map is created in the direction to the destination of the mobile body, and thus the movement planning unit 140 can create a longer-distance or more complicated movement plan.

Furthermore, the in-map position control unit 124 may cause the coordinates of the mobile body to move from the center of the map space on the basis of information pertaining to the environment, in place of the velocity vector of the mobile body. Specifically, the in-map position control unit 124 may cause the coordinates of the mobile body to move from the center of the map space in a direction opposite to a direction in which a human voice is detected by a microphone or in a direction opposite to a direction in which a person or an obstacle is detected by an image capturing device. The amount of movement for the coordinates of the mobile body at this time may be a predetermined amount and may be an amount based on the magnitude of the movement speed of the mobile body, for example. By this, the in-map position control unit 124 can widen the range at which the environment map is created in a direction in which there is a high possibility of a person or obstacle being present and more careful movement is found to be required. Accordingly, the in-map position control unit 124 can cause the safety of the movement plan created by the movement planning unit 140 to improve.

Accordingly, the map creation device according to the present embodiment can dynamically change the range at which the environment map is created by causing the position of the mobile body in the map space to move by the in-map position control unit 124. By this, the map creation device according to the present embodiment can create an environment map for a range at which there is more desire to focus on, without causing memory consumption or the processing load to increase.

Furthermore, the map creation device according to the present embodiment can create a larger-scale world coordinate system fixed environment map by collecting, from a plurality of mobile bodies, the position of the mobile bodies and environment maps created at these positions, and pasting the collected environment maps together.

The sensing reflection unit 125 creates the environment map by reflecting, to the map space, information regarding the distance from the mobile body to an object, on the basis of distance information to which the sensor model is applied and information pertaining to the coordinates/orientation of the mobile body in the map space. The reflection of a sensing result to the map space by the sensing reflection unit 125 can be performed by using Bresenham's line drawing algorithm or the like, for example.

Here, with reference to FIG. 5 through FIG. 6B, description is given regarding creation of the environment map by the sensing reflection unit 125. FIG. 5 is an explanatory view for describing a method of reflecting distance information to a map space. FIG. 6A is a graph view that illustrates an example of occupancy probability thresholds for determining whether a grid cell is an occupied region or a free region, and FIG. 6B is a graph view that illustrates an example of updating grid cell occupancy probabilities.

As illustrated in FIG. 5, the sensing reflection unit 125 updates grid cell occupancy probabilities and creates the environment map by reflecting, to the map space G, information regarding the distance from a sensor So mounted on the mobile body to an object Ob.

Specifically, the sensing reflection unit 125 draws a line segment that connects the sensor So and the object Ob in the map space G, on the basis of the information regarding the distance from the sensor So to the object Ob. At this time, the sensing reflection unit 125 causes the occupancy probability of a grid cell gO that includes the object Ob to rise by only a predetermined value, and causes the occupancy probabilities of grid cells gF that include the line segment connecting the sensor So and the object Ob to decrease by only a predetermined value. In contrast, the grid cells gU through which the line segment connecting the sensor So and the object Ob does not pass are unknown regions that are yet to be observed, and thus, the occupancy probabilities thereof is not caused to change.

The sensing reflection unit 125 updates the occupancy probability of each grid cell by respectively causing information regarding the distance to an observed object to be reflected to the map space to thereby increase or decrease the occupancy probability of the grid cell. The increase or decrease of the occupancy probability of the grid cell can be performed using a binary Bayes filter algorithm, for example. With a binary Bayes filter algorithm, it is possible to represent the occupancy probability at a certain time by a logarithm, and thus, it is possible to combine occupancy probabilities over time by adding together the logarithms (LOG_ODDS) of the occupancy probabilities.

For example, as illustrated in FIG. 6A, with respect to a logarithm for the occupancy probability, it is possible to set a maximum value (MAX) to "3.5," set a threshold (TH_OCC) for determining an occupied region to "0.85," set a threshold (TH_FREE) for determining a free region to "-0.4," and set a minimum value (MIN) to "-2.0." Note that an initial value (INI) for the logarithm for the occupancy probability can be set to an appropriate value between the threshold for determining an occupied region (0.85) and the threshold for determining a free region (-0.4), on the basis of the sensor model.

By this, for a grid cell in which an object is present, it is seen, as illustrated by Case1 in FIG. 6B, that, as a result of gradual rise of the occupancy probability, the occupancy probability goes beyond the threshold (TH_OCC) at which an occupied region is determined and reaches the maximum value (MAX). In addition, for a grid cell in which an object is not present, it is seen, as illustrated by Case2 in FIG. 6B, that, as a result of gradual decrease of the occupancy probability, the occupancy probability goes beyond the threshold (TH_FREE) at which a free region is determined and reaches the minimum value (MIN). Further, for a grid cell that a moving object passes through, it is seen, as illustrated by Case3 in FIG. 6B, that the occupancy probability temporarily rises when the object passes therethrough, but the occupancy probability decreases after the object has passed therethrough and finally reaches the minimum value (MIN).

Accordingly, the sensing reflection unit 125 can set the occupancy probability for each grid cell of the map space on the basis of the distance information, and determine occupied regions and free regions on the basis of the set occupancy probabilities. Thus, the sensing reflection unit 125 can create an environment map in which each grid cell of the map space is classified as any of an occupied region, a free region, or an unknown region.

In the embodiment described above, a case in which the map space and the environment map are two-dimensional matrix grids has been exemplified, but the map creation device according to the present embodiment can be applied to a three-dimensional space. With reference to FIG. 7 and FIG. 8, description is given regarding application of the map creation device according to the present embodiment to a three-dimensional space. FIG. 7 is an explanatory view for describing a ring buffer in a three-dimensional map space. FIG. 8 is an explanatory view for describing reflection of distance information in a three-dimensional map space.

As illustrated in FIG. 7, in a ring buffer for a three-dimensional map space 3DG, one boundary surface is connected to the other boundary surface on the opposite side. Accordingly, for example, in a case where a mobile body present at coordinates Mt at time t moves by 1 in the Y direction to arrive at coordinates Mt+1 at time t+1, the environment map is updated by resetting the grid (also referred to as voxels in the case of three dimensions) gU at the outermost surface of the map space 3DG in the -Y direction to an unknown region that is yet to be observed. Accordingly, even with the three-dimensional map space 3DG, it is possible to use a ring buffer, similarly to a two-dimensional map space.

In addition, as illustrated in FIG. 8, the sensing reflection unit 125 can reflect a sensing result to the map space 3DG by using, for example, Bresenham's line drawing algorithm, even in the three-dimensional map space 3DG. Specifically, the sensing reflection unit 125 can draw line segments that connect the sensor So and objects Ob1 and Ob2, on the basis of the information regarding the distance from the sensor So to the objects Ob1 and Ob2, in the map space 3DG.

Accordingly, the sensing reflection unit 125 can cause the occupancy probability of voxels that include the object Ob1 and an object Ob2p to rise by only a predetermined value, and cause the occupancy probability of voxels that include the line segments connecting the sensor So and objects Ob1 and Ob2p to decrease by only a predetermined value. Note that, because a voxel that includes the object Ob2 is present outside of the map space 3DG, the processing described above is performed using, in place of the object Ob2, an intersection point Ob2p between the side surface of the map space 3DG and the line segment that connects the sensor So and the object Ob2. By this, even with the three-dimensional map space 3DG, it is possible to reflect a sensing result similarly to a two-dimensional map space.

The map creation unit 120 according to the present embodiment described above or the control device 100 that includes a map creation unit can be realized by collaboration between hardware and software. For example, the map creation unit 120 or the control device 100 can be realized by using a CPU, a ROM, and a RAM as the hardware.

The CPU functions as an arithmetic processing device, and controls overall operation of the control device 100 or the map creation unit 120 in accordance with various types of programs stored in the ROM. The ROM stores arithmetic parameters and programs used by the CPU. The RAM temporarily stores a program used in execution by the CPU, a parameter that changes as appropriate in this execution, and the like.

In addition, it is also possible to create a computer program for causing these pieces of hardware to exercise functionality equivalent to respective configurations of the control device 100 or the map creation unit 120 according to the present embodiment described above. In addition, it is also possible to provide a storage medium in which this computer program is caused to be stored.

### <4. Operation of map creation unit>

Next, with reference to FIG. 9, description is given regarding an example of operation of the map creation unit 120 included in the control device 100. FIG. 9 is a flow chart for describing an example of a flow of operations for the map creation unit 120.

As illustrated in FIG. 9, firstly, in the map creation unit 120, a velocity vector for a mobile body is obtained (S101), and it is determined whether or not the magnitude of the velocity vector of the mobile body is greater than or equal to a threshold (S103). In the case where the magnitude of the velocity vector is greater than or equal to the threshold (S103/Yes), the coordinates for the mobile body are set after causing the coordinates for the mobile body to move from the center of the map space in a direction opposite to the direction of the velocity vector (S105). Meanwhile, in the case where the magnitude of the velocity vector is less than the threshold (S103/No), the coordinates of the mobile body are set to the center of the map space (S106). Subsequently, by reflecting a sensing result for distance information to the map space, an environment map is created (S107).

As a result of such operations as described above, the map creation unit 120 can dynamically change the range of the environment map that is created. Hence, the map creation unit 120 can create an environment map for a range at which there is more desire to focus on, without causing memory consumption or the processing load to increase.

### <5. Modification>

### (5.1. Configuration of modification)

Next, with reference to FIG. 10A through FIG. 10D, description is given regarding a modification of the map creation unit 120. FIG. 10A through FIG. 10D are explanatory views that each illustrate an environment map created by the modification of the map creation unit 120, and an example of correspondence with the environment around a mobile body.

As illustrated in FIG. 10A through FIG. 10D, in the present modification, the map space includes a basic map space G and an expanded map space G_{E}. The basic map space G is a map space G in which the coordinates of the mobile body are set. Specifically, in the basic map space G, the coordinates of the mobile body are set to coordinates that have moved from the center in a direction opposite to the direction of movement of the mobile body. In addition, the expanded map space G_{E} is a map space provided adjacent to or overlapping with the basic map space G. The basic map space G and the expanded map space G_{E} function as one ring buffer as a whole. Note that the expanded map space G_{E} may be an occupancy grid map having a size similar to a size of the basic map space G.

In the present modification, the direction with respect to the basic map space G in which the expanded map space G_{E} is provided is controlled on the basis of information pertaining to the environment or the mobile body. Note that, whether or not to provide the expanded map space G_{E} with respect to the basic map space G may be decided on the basis of whether or not the magnitude of the velocity vector of the mobile body is greater than or equal to a threshold.

As illustrated in FIG. 10A through FIG. 10D, the direction with respect to the basic map space G in which the expanded map space G_{E} is provided may be controlled on the basis of the direction of movement of the mobile body. Specifically, in cases where a mobile body M is moving with velocity vectors V_{A} through V_{D}, the expanded map space G_{E} may be provided adjacent to the basic map space G in the direction of the velocity vectors V_{A} through V_{D} with respect to the basic map space G. As a result of this, an environment map created for the map space becomes a map that holds both objects Ob_{A} and Ob_{B} that are present in the direction of movement of the mobile body M. Accordingly, by creating a movement plan using such an environment map, it is possible to realize smoother movement by the mobile body M.

For example, in a case where the direction of the velocity vector V_{A} of the mobile body M is forward as illustrated in FIG. 10A, the expanded map space G_{E} may be provided forward of the basic map space G. In a case where the direction of the velocity vectors V_{B} and V_{C} of the mobile body M is diagonally forward as illustrated in FIG. 10B and FIG. 10C, the expanded map space G_{E} may be provided diagonally forward of the basic map space G. For example, in a case where the direction of the velocity vector V_{D} of the mobile body M is leftward as illustrated in FIG. 10D, the expanded map space G_{E} may be provided leftward of the basic map space G. By virtue of the map creation unit 120 according to the present modification, it is possible to create an environment map having a map space that is expanded in a direction for a range at which there is more desire to focus on, while suppressing increases in memory consumption and processing load.

In addition, the direction with respect to the basic map space G in which the expanded map space G_{E} is provided may be controlled on the basis of a movement plan for the mobile body. Specifically, with respect to the basic map space G, the expanded map space G_{E} may be provided adjacent to or overlapping with the basic map space G in the direction of the destination (or arrival position) in the movement plan for the mobile body. Hence, the map creation unit 120 can create an environment map having a map space that is expanded in a direction for a range at which there is more desire to focus on, while suppressing increases in memory consumption and processing load.

Furthermore, the direction with respect to the basic map space G in which the expanded map space G_{E} is provided may be controlled on the basis of information pertaining to the environment. Specifically, with respect to the basic map space G, the expanded map space G_{E} may be provided adjacent to or overlapping with the basic map space G in a direction in which a human voice is detected by a microphone or a direction in which a person or an obstacle is detected by an image capturing device. As a result of this, the map creation unit 120 can create an environment map having a map space that is expanded in a direction in which there is a high possibility of a person or obstacle being present and more careful movement is found to be required. Accordingly, it becomes possible for the map creation unit 120 to cause the safety of a movement plan created on the basis of the environment map to improve.

By virtue of the present modification, on the basis of information pertaining to the environment or the mobile body, it is possible to dynamically expand the range of an environment map that is created. Hence, the map creation unit 120 can create an environment map that enables a smoother movement plan for the mobile body to be created, while suppressing memory consumption and processing load.

### (5.2. Operation of modification)

Next, with reference to FIG. 11, description is given regarding an example of operation of the map creation unit 120 according to the present modification. FIG. 11 is a flow chart for describing an example of a flow of operations for the map creation unit 120 according to the present modification.

As illustrated in FIG. 11, firstly, in the map creation unit 120, a velocity vector for a mobile body is obtained (S201). Next, it is determined whether or not the magnitude of the velocity vector for the mobile body is greater than or equal to a threshold (S203). In the case where the magnitude of the velocity vector is greater than or equal to the threshold (S203/Yes), an expanded map space is also set in relation to a basic map space, in the direction of the velocity vector (S209). Next, the coordinates of the mobile body are set after causing the coordinates of the mobile body to move from the center of the basic map space in a direction opposite to the direction of the velocity vector (S205). Subsequently, by reflecting a sensing result for distance information to the basic map space and expanded map space, an environment map is created (S207).

Meanwhile, in the case where the magnitude of the velocity vector is less than the threshold (S203/No), the coordinates of the mobile body are set to the center of the basic map space (S206). Subsequently, by reflecting a sensing result for distance information to the basic map space, an environment map is created (S208).

By operations as above, the map creation unit 120 can more dynamically change the range of the environment map that is created. Hence, the map creation unit 120 can create an environment map for a range at which there is more desire to focus on, while suppressing memory consumption and processing load.

### <6. Display examples>

With reference to FIG. 12 through FIG. 13B, description is given below regarding an example of displaying an environment map created by a map creation device according to the present embodiment. FIG. 12 is a block view for describing a configuration of a controller in which an environment map is displayed. FIG. 13A and FIG. 13B are explanatory views that illustrate examples of displaying an environment map.

As illustrated in FIG. 12, the control device 100 that includes a map creation device according to the present embodiment is a control device that controls operation of a mobile body 10. Specifically, the control device 100 controls movement and the like for the mobile body 10 by creating an environment map on the basis of information obtained from the sensor 200 and controlling an actuator 400 on the basis of a movement plan created on the basis of the environment map. For example, the mobile body 10 may be a flight vehicle such as a drone, and the actuator 400 may be, for example, a motor for causing a rotor or the like of the flight vehicle to rotate.

Here, a destination or the like for movement of the mobile body 10 can be inputted to a controller 20 through communication devices 310 and 320 that can perform wireless communication with each other. The controller 20 is, for example, a transmission/reception device that wirelessly steers the mobile body 10, and is provided with a display device 500 and an input device 600.

The input device 600 includes an input mechanism such as a button, a switch, or a lever to which a user can input information, and an input control circuit for generating an input signal on the basis of the inputted information and outputting the input signal to the communication device 320. The display device 500 includes a display device such as a liquid crystal display device or an OLED (Organic Light Emitting Diode) display device. For example, the display device 500 can display an environment map or the like that is created by the control device 100 of the mobile body 10. A user can steer the mobile body 10 with greater accuracy by visually recognizing an environment map created by the control device 100.

For example, as illustrated in FIG. 13A and FIG. 13B, the controller 20 is provided with the display device 500 and the input device 600, and a captured image 510 that is captured by the mobile body 10 as well an image 520 of an environment map created by the control device 100 may be displayed on the display device 500 of the controller 20.

The display example for the display device 500 illustrated in FIG. 13A is a display example for a case where the mobile body 10 moves at low speed. Accordingly, in the image 520 of the environment map, the coordinates of the mobile body M are set to the center of the map space G, and an environment map that uniformly includes the environment surrounding the mobile body M is illustrated. Accordingly, only the object Ob_{A} is included in the map space G for the image 520 environment map. However, referring to the captured image 510, it is possible to confirm that an object Ob_{B}, which is not illustrated in the map space G, is present behind the object Ob_{A}. When the mobile body 10 moves at low speed, there is a low probability for the object Ob_{B} to influence the movement plan for the mobile body 10, and thus, the display device 500 may display an environment map that uniformly indicates the environment surrounding the mobile body 10.

The display example for the display device 500 illustrated in FIG. 13B is a display example for a case where the mobile body 10 moves at high speed. Accordingly, in the image 520 of the environment map, the coordinates of the mobile body M are set after being moved from the center of the map space G in the direction opposite to the direction of a velocity vector V_{H}, and an environment map that more widely includes the environment on the side of the direction of movement of the mobile body M is illustrated. Accordingly, the map space G for the environment map of the image 520 includes both of the object Ob_{A} and the object Ob_{B} which is confirmed to be behind the object Ob_{A} in the captured image 510. When the mobile body 10 moves at high speed, there is a high probability for the object Ob_{B} to influence the movement plan for the mobile body 10, and thus, the display device 500 may display an environment map that widely illustrates the environment in the direction of movement of the mobile body 10.

Description in detail has been given above regarding preferred embodiments of the present disclosure with reference to the attached drawings, but the technical scope of the present disclosure is not limited to the corresponding examples. It is obvious that various modifications or revisions within the category of the technical concept set forth in the claims can be conceived of by a person having ordinary knowledge in the technical field of the present disclosure, and it is understood that these modifications or revisions justifiably belong to the technical scope of the present disclosure.

In addition, effects described in the present specification are only descriptive or illustrative, and are not limiting. In other words, in addition to or in place of the effects described above, a technique according to the present disclosure can achieve other effects that are clear to a person skilled in the art from the description of the present specification.

Note that configurations such as the following also belong to the technical scope of the present disclosure.
(1) A map creation device including:
   an in-map position control unit that sets, on the basis of information pertaining to a mobile body or an environment, position coordinates of the mobile body, the position coordinates being set on a map space in which a boundary demarcating a space and a boundary on a side opposite the boundary are connected; and
   a sensing reflection unit that creates an environment map corresponding to the environment surrounding the mobile body by causing environment information, sensed by the mobile body, to be reflected to the map space.
(2) The map creation device according to (1) above, in which
   the in-map position control unit sets the position coordinates of the mobile body in the map space on the basis of a movement plan or a movement speed of the mobile body.
(3) The map creation device according to (2) above, in which
   the in-map position control unit sets the position coordinates of the mobile body to coordinates resulting from causing the position coordinates of the mobile body to move from a center of the map space in a direction opposite to a direction of movement of the mobile body or in a direction opposite to a direction of an arrival position in the movement plan.
(4) The map creation device according to (3) above, in which
   the in-map position control unit sets the position coordinates of the mobile body to coordinates resulting from causing the position coordinates of the mobile body to move from the center of the map space by only a distance according to the movement speed of the mobile body.
(5) The map creation device according to (3) above, in which
   the map space includes a basic map space and an expanded map space, and
   the in-map position control unit sets the position coordinates of the mobile body to coordinates resulting from causing the position coordinates of the mobile body to move from a center of the basic map space in the direction opposite to the direction of movement of the mobile body or in the direction opposite to the direction of the arrival position in the movement plan.
(6) The map creation device according to (5) above, in which
   the expanded map space is provided adjacent to the basic map space in the direction of movement of the mobile body or in the direction of the arrival position in the movement plan.
(7) The map creation device according to (5) or (6) above, in which
   a size of the expanded map space is equal to a size of the basic map space.
(8) The map creation device according to any one of (1) through (7) above, in which
   the in-map position control unit sets the position coordinates of the mobile body in the map space on the basis of information pertaining to audio from the environment.
(9) The map creation device according to any one of (1) through (8) above, in which
   the environment information includes information pertaining to the distance from the mobile body to respective objects present in the environment.
(10) The map creation device according to (9) above, in which
   the map space is partitioned into grid cells each having a predetermined size, and
   the sensing reflection unit determines whether the grid cells are either occupied regions or free regions on the basis of occupancy probabilities for the grid cells, for the respective objects.
(11) The map creation device according to (10) above, in which
   on the basis of the environment information sensed by the mobile body, the sensing reflection unit causes the occupancy probabilities of grid cells that include the respective objects to increase.
(12) The map creation device according to (10) or (11) above, in which
   in a case where a movement range of the mobile body goes beyond the grid cells, the sensing reflection unit updates the environment map by changing grid cells in the environment map that are on a side opposite to the direction of movement of the mobile body to unknown regions.
(13) The map creation device according to any one of (1) through (12) above, in which
   the map creation device includes a ring buffer.
(14) The map creation device according to any one of (1) through (13) above, in which
   an orientation of the map space is set such that an orientation of the mobile body is fixed with respect to the map space.
(15) The map creation device according to any one of (1) through (14) above, in which
   the map space includes a three-dimensional space, and
   the mobile body includes a flight vehicle.
(16) The map creation device according to any one of (1) through (15) above, in which
   the environment map is displayed by a transmission/reception device that wirelessly steers the mobile body.
(17) The map creation device according to (16) above, in which
   the transmission/reception device displays, together with the environment map, a captured image of the environment that is captured by the mobile body.
(18) A map creation method including:
   by an arithmetic device,
   setting, on the basis of information pertaining to a mobile body or an environment, position coordinates of the mobile body, the position coordinates being set on a map space in which one boundary demarcating a space and another boundary on a side opposite the one boundary are connected; and
   creating an environment map corresponding to the environment surrounding the mobile body by causing environment information, sensed by the mobile body, to be reflected to the map space.
(19) A program for causing a computer to function as:
   an in-map position control unit that sets, on the basis of information pertaining to a mobile body or an environment, position coordinates of the mobile body, the position coordinates being set on a map space in which one boundary demarcating a space and another boundary on a side opposite the one boundary are connected; and
   a sensing reflection unit that creates an environment map corresponding to the environment surrounding the mobile body by causing environment information, sensed by the mobile body, to be reflected to the map space.

### [Reference Signs List]

- 10: Mobile body
- 20: Controller
- 100: Control device
- 110: Self-position calculation unit
- 120: Map creation unit
- 121: Position/orientation updating unit
- 122: Velocity vector obtainment unit
- 123: Sensor model application unit
- 124: In-map position control unit
- 125: Sensing reflection unit
- 130: Obstacle detection unit
- 140: Movement planning unit
- 150: Action planning unit
- 160: Action control unit
- 200: Sensor
- 210: Image sensor
- 220: IMU
- 230: Distance sensor
- 310, 320: Communication device
- 400: Actuator
- 500: Display device
- 600: Input device

## Claims

1. A map creation device comprising:
an in-map position control unit that sets, on a basis of information pertaining to a mobile body or an environment, position coordinates of the mobile body, the position coordinates being set on a map space in which a boundary demarcating a space and a boundary on a side opposite the boundary are connected; and
a sensing reflection unit that creates an environment map corresponding to the environment surrounding the mobile body by causing environment information, sensed by the mobile body, to be reflected to the map space.

2. The map creation device according to claim 1, wherein
the in-map position control unit sets the position coordinates of the mobile body in the map space on a basis of a movement plan or a movement speed of the mobile body.

3. The map creation device according to claim 2, wherein
the in-map position control unit sets the position coordinates of the mobile body to coordinates resulting from causing the position coordinates of the mobile body to move from a center of the map space in a direction opposite to a direction of movement of the mobile body or in a direction opposite to a direction of an arrival position in the movement plan.

4. The map creation device according to claim 3, wherein
the in-map position control unit sets the position coordinates of the mobile body to coordinates resulting from causing the position coordinates of the mobile body to move from the center of the map space by only a distance according to the movement speed of the mobile body.

5. The map creation device according to claim 3, wherein
the map space includes a basic map space and an expanded map space, and
the in-map position control unit sets the position coordinates of the mobile body to coordinates resulting from causing the position coordinates of the mobile body to move from a center of the basic map space in the direction opposite to the direction of movement of the mobile body or in the direction opposite to the direction of the arrival position in the movement plan.

6. The map creation device according to claim 5, wherein
the expanded map space is provided adjacent to the basic map space in the direction of movement of the mobile body or in the direction of the arrival position in the movement plan.

7. The map creation device according to claim 5, wherein
a size of the expanded map space is equal to a size of the basic map space.

8. The map creation device according to claim 1, wherein
the in-map position control unit sets the position coordinates of the mobile body in the map space on a basis of information pertaining to audio from the environment.

9. The map creation device according to claim 1, wherein
the environment information includes information pertaining to the distance from the mobile body to respective objects present in the environment.

10. The map creation device according to claim 9, wherein
the map space is partitioned into grid cells each having a predetermined size, and
the sensing reflection unit determines whether the grid cells are either occupied regions or free regions on the basis of occupancy probabilities for the grid cells, for the respective objects.

11. The map creation device according to claim 10, wherein
on a basis of the environment information sensed by the mobile body, the sensing reflection unit causes the occupancy probabilities of grid cells that include the respective objects to increase.

12. The map creation device according to claim 10, wherein
in a case where a movement range of the mobile body goes beyond the grid cells, the sensing reflection unit updates the environment map by changing grid cells in the environment map that are on a side opposite to the direction of movement of the mobile body to unknown regions.

13. The map creation device according to claim 1, wherein
the map creation device includes a ring buffer.

14. The map creation device according to claim 1, wherein
an orientation of the map space is set such that an orientation of the mobile body is fixed with respect to the map space.

15. The map creation device according to claim 1, wherein
the map space includes a three-dimensional space, and
the mobile body includes a flight vehicle.

16. The map creation device according to claim 1, wherein
the environment map is displayed by a transmission/reception device that wirelessly steers the mobile body.

17. The map creation device according to claim 16, wherein
the transmission/reception device displays, together with the environment map, a captured image of the environment that is captured by the mobile body.

18. A map creation method comprising:
by an arithmetic device,
setting, on a basis of information pertaining to a mobile body or an environment, position coordinates of the mobile body, the position coordinates being set on a map space in which one boundary demarcating a space and another boundary on a side opposite the one boundary are connected; and
creating an environment map corresponding to the environment surrounding the mobile body by causing environment information, sensed by the mobile body, to be reflected to the map space.

19. A program for causing a computer to function as:
an in-map position control unit that sets, on a basis of information pertaining to a mobile body or an environment, position coordinates of the mobile body, the position coordinates being set on a map space in which one boundary demarcating a space and another boundary on a side opposite the one boundary are connected; and
a sensing reflection unit that creates an environment map corresponding to the environment surrounding the mobile body by causing environment information, sensed by the mobile body, to be reflected to the map space.
